# EUROPÄISCHE PATENTSCHRIFT

(11) **EP 2 844 968 B1**
(45) Veröffentlichungstag und Bekanntmachung des Hinweises auf die Patenterteilung: **24.08.2016**
(21) Anmeldenummer: 13712144.8
(22) Anmeldetag: 20.03.2013
(51) Int. Cl.: G01G 7/04

(54) **ELEKTROMAGNETISCH KRAFTKOMPENSIERENDE KRAFTMESSVORRICHTUNG**
ELECTROMAGNETICALLY FORCE-COMPENSATING FORCE-MEASURING APPARATUS
DISPOSITIF DYNAMOMÉTRIQUE À COMPENSATION DE FORCE ÉLECTROMAGNÉTIQUE

(30) Priorität: 10.04.2012 DE 102012103037
(43) Veröffentlichungstag der Anmeldung: 11.03.2015
(73) Patentinhaber: Sartorius Lab Instruments GmbH & Co. KG, 37079 Göttingen (DE)
(72) Erfinder: FELDOTTE, Heinrich, 37079 Göttingen (DE); HOLST, Heyko, 37085 Göttingen (DE)
(74) Vertreter: Schneider, Peter Christian
(86) Internationale Anmeldenummer: PCT/EP2013/000838
(87) Internationale Veröffentlichungsnummer: WO 2013/152828

(56) Entgegenhaltungen:
- EP-A1- 2 253 944
- EP-A1- 2 278 283
- DE-A1- 2 400 881
- DE-A1- 3 149 990
- US-A- 4 159 747

## Beschreibung

### Gebiet der Erfindung

Die Erfindung betrifft eine elektromagnetisch kraftkompensierende Kraftmessvorrichtung, umfassend
- eine in einer Permanentmagnetanordnung gelagerte, bei Betrieb von einem mittels eines Reglers kraftabhängig erzeugten Spulenstrom durchflossene Tragspule, und
- einen integrierenden Analog/Digital-Wandler, der eingerichtet ist, ein für den Spulenstrom repräsentatives elektrisches Signal, welches an seinem Messsignaleingang anliegt, in ein digitales Ausgangssignal zu wandeln,
wobei der Analog/Digital-Wandler an seinem Referenzspannungseingang mit einer Referenzspannungsquelle mit zwei zueinander betragsgleichen und umgekehrt gepolten Referenzspannungen verbunden ist, welche ein Referenzspannungsschalter abwechselnd mit einem Integrator des Analog/Digital-Wandlers verbindet, wobei ein Verhältnis der Intervalle, in denen die einzelnen Referenzspannungen innerhalb eines Messtaktes mit dem Integrator verbunden sind, ein Maß für den aktuell fließenden Spulenstrom darstellt.

### Stand der Technik

Nach dem Prinzip der elektromagnetischen Kraftkompensation arbeitende, digitale Kraftmessvorrichtungen, beispielsweise Digitalwaagen sind seit langem bekannt. Die EP 2 253 944 A1 offenbart eine derartige Digitalwaage.

Beim Messprinzip der elektromagnetischen Kraftkompensation ist eine mit einem Lastarm verbundene Tragspule axial beweglich im Luftspalt eines Permanentmagneten angeordnet. Stromfluss durch die Tragspule erzeugt ein Magnetfeld, welches mit dem Magnetfeld des Permanentmagneten wechselwirkt und zu einer Auslenkung der Spule und des mit ihr verbundenen Lastarms führt. Die Position des Lastarms wird durch geeignete Positionssensoren detektiert. Die Stromquelle des Spulenstroms und die Positionssensoren sind Bestandteil eines Regelkreises dessen Regelgröße die Position des Lastarms und dessen Stellgröße der Stromfluss durch die Tragspule ist. Wird der Lastarm durch eine zu messende Kraft ausgelenkt, wird diese Auslenkung von den Positionssensoren gemessen und an einen Regler kommuniziert, der den Stromfluss durch die Tragspule so verändert, dass der Auslenkung entgegengewirkt wird. Der Strom durch die Tragspule ist somit ein direktes Maß für die auf den Lastarm wirkende Kraft. Der Spulenstrom oder eine für diesen repräsentative Größe wird in einem nachgeschalteten Analog/Digitalwandler, kurz A/D-Wandler, digitalisiert. Insbesondere das Prinzip des integrierenden A/D-Wandlers hat sich etabliert.

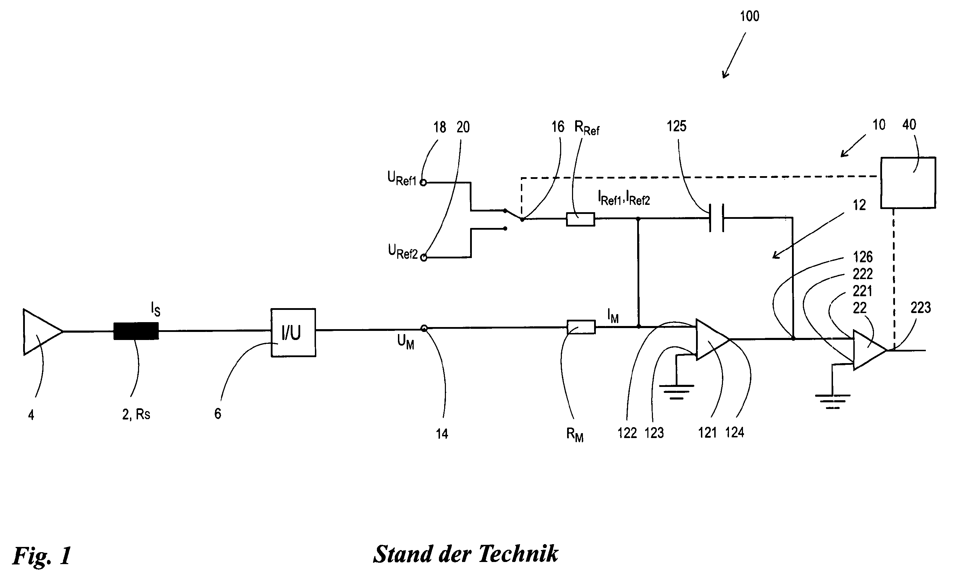

Ein Prinzipschaltbild einer elektronischen Messwerterfassungsvorrichtung 100 einer solchen Kraftmessvorrichtung mit einer Tragspule 2, einem Regler 4 und einem A/D-Wandler 10 ist in Figur 1 dargestellt.

Das Kernstück des A/D-Wandlers 10 ist der Integrator 12, der einen Operationsverstärker mit einem invertierenden Eingang 122, einem nicht-invertierenden Eingang 123 und einem Ausgang 124 sowie einen Kondensator 125 umfasst, der zwischen dem invertierenden Eingang 122 und dem Ausgang 124 des Operationsverstärkers 121 geschaltet ist. Der nicht-invertierende Eingang 123 des Operationsverstärkers 121 ist gegen eine Referenzspannung, insbesondere gegen Masse geschaltet. Der invertierende Eingang 122 ist über den Messwiderstand R_{M} mit dem Messspannungseingang 14 verbunden, an dem bei Betrieb die Messspannung UM angelegt wird, die repräsentativ für den die Tragspule durchfließenden Spulenstrom I_{S} ist. Insbesondere kann der Spulenstrom I_{S} durch einen Strom/Spannungswandler 6 in die Messspannung UM gewandelt werden. Außerdem ist der invertierende Eingang 122 über einen Referenzwiderstand R_{Ref} mit dem Referenzspannungsschalter 16 verbunden, der je nach Schaltstellung alternativ entweder den ersten Referenzspannungseingang 18 oder den zweiten Referenzspannungseingang 20 elektrisch ankoppelt. An den Referenzspannungseingängen 18, 20 liegt jeweils eine Referenzspannung U_{Ref1} bzw. U_{Ref2} an, die typischerweise zueinander umgekehrte Polarität haben und den gleichen Spannungsbetrag aufweisen können. Der Integratorausgang 126, ist mit dem Testspannungseingang 221 eines Komparators 22 verbunden, dessen Referenzspannungseingang 222 gegen eine Komparator-Referenzspannung geschaltet ist, die z.B. Masse sein kann. Der Komparator 22 gibt an seinem Ausgang 223 jeweils ein Signal oder eine Signaländerung aus, wenn die am Testspannungseingang 221 anliegende Testspannung der am Referenzspannungseingang 222 anliegenden Referenzspannung entspricht. Das Komparator-Ausgangssignal ist über eine Steuereinrichtung 40 als Schaltsignal zum Referenzspannungsschalter 16 rückgekoppelt.

Ein derartiger A/D-Wandler arbeitet wie folgt: In einer ersten Phase eines Messtaktes der Messtaktdauer T ist der Referenzspannungsschalter 16 so geschaltet, dass der erste Referenzspannungseingang 18 angeschlossen ist. Während dieser Phase integriert der Integrator die Summe aus dem Messstrom IM, der sich aus dem Spannungsabfall der Messspannung UM über dem Messwiderstand R_{M} ergibt, und dem Referenzstrom I_{Ref1}, der sich aus dem Spannungsabfall der ersten Referenzspannung U_{Ref1} über dem Referenzwiderstand R_{Ref} ergibt, auf. Nach einer von der Steuereinrichtung 40 vorgegebenen Zeit, nämlich der Dauer einer ersten Messphase t1, die somit eine Aufintegrationsphase darstellt, schaltet der Referenzspannungsschalter 16 um, sodass der erste Referenzspannungseingang 18 abgekoppelt und der zweite Referenzspannungseingang 20 angekoppelt wird. Der Integrator integriert nun die Summe aus Messstrom IM und dem Referenzstrom I_{Ref2}, der sich durch den Spannungsabfall der zweiten Referenzspannung U_{Ref2} über dem Referenzwiderstand R_{Ref} ergibt, ab. Bei diesem Beispiel sind die Polaritäten von Messspannung U_{M} und erster Referenzspannung U_{Ref1} entgegengesetzt und die Polaritäten von Messspannung UM und zweiter Referenzspannung U_{Ref2} gleich. Die auf- bzw. abintegrierte Spannung liegt jeweils am Integratorausgang 126 und somit am Testspannungseingang 221 des Komparators 22 an.

Diese zweite Messphase, die somit eine Abintegrationsphase darstellt, wird hier mit τ bezeichnet. Sobald die Integratorspannung vollständig abintegriert ist, ergeht ein Komparator-Signal, welches von der Steuereinrichtung 40 genutzt wird, um den Referenzspannungsschalter 16 erneut umzuschalten und einen neuen Messtakt zu beginnen. Außerdem kann die Steuereinrichtung 40, die während des vergangenen Messtaktes die Zeitdauern der beiden Messphasen t1 = T-τ und τ gemessen und insbesondere das Verhältnis der Dauer der zweiten Messphase τ zur Messtaktdauer T des vergangenen Messtaktes, d.h. den Tastgrad δ = τ/T berechnet hat, einen entsprechenden Zahlenwert ausgeben, der ein Maß für die während des Messtaktes anliegende Messspannung U_{M} und damit für den die Tragspule 2 durchfließenden Spulenstrom I_{S} ist.

Nachteilig an der zwangsläufigen Abhängigkeit des Spulenstroms I_{S} vom aktuellen Messwert ist, dass auch die in der Tragspule anfallende Verlustleistung messwertabhängig ist. Die Verlustleistung führt zu einer Erwärmung der Gesamtvorrichtung, sodass thermische Einflüsse (Fehler) ebenfalls messwertabhängig sind. Dies ist für Präzisionsmessungen nicht tolerierbar. Die zuvor bereits genannte EP 2 2534 944 A1 offenbart eine Möglichkeit der Verlustleistungskompensation der Tragspule. Insbesondere wird vorgeschlagen, die Tragspule mit einer zweifachen Wicklung zu versehen, wobei jede Teilwicklung mit einer eigenen Spulenstromquelle verbunden ist. Die Spulenstromquellen werden derart angesteuert, dass die Summe ihrer Ströme die zur Kompensation der Gewichtskraft erforderlichen elektromagnetischen Kräfte erzeugt, wobei gleichzeitig die in der Tragspule aufgenommene Verlustleistung konstant bleibt.

Aus der DE 31 49 990 A1 ist ein anderer Ansatz bekannt. Hier wird die Tragspule zusätzlich zu dem als Gleichstrom ausgelegten Spulenstrom mit einem Wechselstrom zur Erzeugung einer Übertemperatur in der Tragspule beaufschlagt. Ein zu dem Gleich- und Wechselstrom in der Tragspule proportionaler Gleich- und Wechselstrom wird durch einen stark temperaturabhängigen Widerstand einer Spannungsteilerschaltung, insbesondere einen Glühdraht, geleitet, dessen Widerstandswert durch einen Regler konstant gehalten wird. Aufgrund der Proportionalität der Ströme in der Tragspule und im Glühdraht resultiert eine konstante Verlustleistung in der Tragspule.

### Aufgabenstellung

Es ist die Aufgabe der vorliegenden Erfindung, eine alternative Kompensation der in der Tragspule anfallenden Verlustleistung zur Verfügung zu stellen.

### Darlegung der Erfindung

Diese Aufgabe wird in Verbindung mit den Merkmalen des Oberbegriffs von Anspruch 1 dadurch gelöst, dass der Ausgang des Reglers über einen ersten, thermisch mit der Tragspule gekoppelten Heizwiderstand mit dem Ausgang eines Spannungsverstärkers verbunden ist, dessen Eingang mit dem Ausgang des Referenzspannungsschalters verbunden ist, und dass der Tragspule ein Strom/Spannungs-Wandler nachgeschaltet ist, dessen Ausgang mit dem Messspannungseingang des Analog/Digital-Wandlers sowie über einen Invertierer und einen zweiten Heizwiderstand mit dem Eingang des Spannungsverstärkers verbunden ist
wobei
- der Widerstandwert des ersten Heizwiderstandes gleich dem Widerstandswert der Tragspule ist,
- der Widerstandswert des zweiten Heizwiderstandes gleich dem Wandlungsfaktor des Strom/Spannungs-Wandlers ist und
- der Verstärkungsfaktor des Spannungsverstärkers gleich dem Quotienten aus dem Widerstandswert des ersten Heizwiderstandes zu dem Widerstandswert des zweiten Heizwiderstandes ist.

Die Aufgabe wird weiter in Verbindung mit den Merkmalen des Oberbegriffs von Anspruch 4 dadurch gelöst, dass der Ausgang des Reglers über einen Invertierer, einen ersten, thermisch mit der Tragspule gekoppelten Heizwiderstand und einen zweiten Heizwiderstand mit dem Ausgang eines Spannungsverstärkers verbunden ist, dessen Eingang mit dem Ausgang des Referenzspannungsschalters verbunden ist, und dass der Tragspule ein passiver Strom/Spannungswandler mit einem gegen Masse geschalteten Shunt-Widerstand nachgeschaltet ist, dessen Ausgang mit dem Messspannungseingang des Analog/Digital-Wandlers verbunden ist,
wobei
- der Widerstandwert des ersten Heizwiderstandes gleich dem Widerstandswert der Tragspule ist,
- der Widerstandswert des zweiten Heizwiderstandes gleich dem Widerstandswert des Shunt-Widerstandes ist und
- der Verstärkungsfaktor des Spannungsverstärkers gleich dem Quotienten aus der Summe der Widerstandswerte von erstem und zweitem Heizwiderstand zu dem Widerstandswert des zweiten Heizwiderstandes ist.

Bevorzugte Ausführungsformen sind Gegenstand der abhängigen Ansprüche.

Die beiden Erfindungsvarianten unterfallen demselben erfinderischen Grundgedanken, die Verlustleistung der Tragspule durch einen zusätzlichen Heizwiderstand zu kompensieren, der mit einem für den Tastgrad, d.h. den Messwert repräsentativen Strom beschickt wird. Die Tastgradabhängigkeit erfolgt durch Abgriff der jeweils angelegten Referenzspannung, die zeitlich exakt mit dem Tastgrad variiert. Die Tragspulen-Verlustleistung wird somit nicht zu jedem infinitesimalen Zeitpunkt exakt kompensiert, sondern jeweils im Mittel über einen Messtakt. Dies ist jedoch völlig ausreichend, da übliche Messfrequenzen im Bereich mehrer hundert Hertz liegen und damit deutlich schneller sind als jegliche thermische Einflüsse. Allerdings bedarf es zur Realisierung des erfinderischen Grundgedankens weiterer Elemente, die ihrerseits eine messwertabhängige und daher kompensierungsbedürftige Verlustleistung provozieren. Zur Umsetzung des erfinderischen Grundgedankens bedarf es somit der Zusammenschau und gemeinsamen Berücksichtigung einer Vielzahl von Elementen, was zu den genannten zwei unterschiedlichen Erfindungsvarianten führt.

Bei einer bevorzugten Ausführungsform der ersten Erfindungsvariante kann vorgesehen sein, dass der Strom/Spannungs-Wandler einen seriell zwischen der Tragspule und dem Eingang des Analog/Digitalwandlers geschalteten Wandler-Widerstand und einen parallel zu diesem geschalteten Differenzverstärker aufweist, dessen zweiter Eingang vorzugsweise gegen Masse geschaltet ist. Eine solche Ausgestaltung eines Strom/Spannungs-Wandlers ist dem Fachmann im Grunde bekannt. Der Wandlungsfaktor entspricht dem Widerstandswert des Wandler-Widerstandes.

Bei einer Weiterbildung der ersten Erfindungsvariante ist vorgesehen, dass der Invertierer Bestandteil einer Leistungskompensationsschaltung innerhalb des Analog/DigitalWandlers ist. Auch innerhalb des A/D-Wandlers besteht das Problem, dass der Messwiderstand R_{M} von einem messwertabhängigen Strom durchflossen wird, was zu einer messwertabhängigen Verlustleistung im Wandler führt. Hier sind verschiedene von der Tragspulen-Verlustleistungskompensation unabhängige Kompensationsmaßnahmen denkbar, die unter anderem eine Invertierung der Messspannung erforderlich machen. Dieses invertierte Signal spielt auch im Rahmen der Tragspulen-Verlustleistungskompensation eine Rolle, sodass das entsprechende Bauteil, d.h. der Invertierer, gemeinsam genutzt und ein Bauteil eingespart werden kann.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Prinzipskizze einer elektronischen Messwerterfassungsvorrichtung einer herkömmlichen Kraftmessvorrichtung,
- Figur 2:: eine Prinzipskizze einer ersten Ausführungsform einer elektronischen Messwerterfassungsvorrichtung einer Kraftmessvorrichtung gem. erster Erfindungsvariante,
- Figur 3:: eine Prinzipskizze einer zweiten Ausführungsform einer elektronischen Messwerterfassungsvorrichtung einer Kraftmessvorrichtung gem. erster Erfindungsvariante,
- Figur 4:: eine Prinzipskizze einer ersten Ausführungsform einer elektronischen Messwerterfassungsvorrichtung einer Kraftmessvorrichtung gem. zweiter Erfindungsvariante,
- Figur 5:: eine Prinzipskizze einer zweiten Ausführungsform einer elektronischen Messwerterfassungsvorrichtung einer Kraftmessvorrichtung gem. zweiter Erfindungsvariante.

### Beschreibung bevorzugter Ausführungsformen

Gleiche Bezugszeichen in den Figuren weisen auf gleiche oder analoge Bauteile hin.

Figur 1 wurde bereits weiter oben im Zusammenhang mit der Erläuterung des Standes der Technik ausführlich beschrieben.

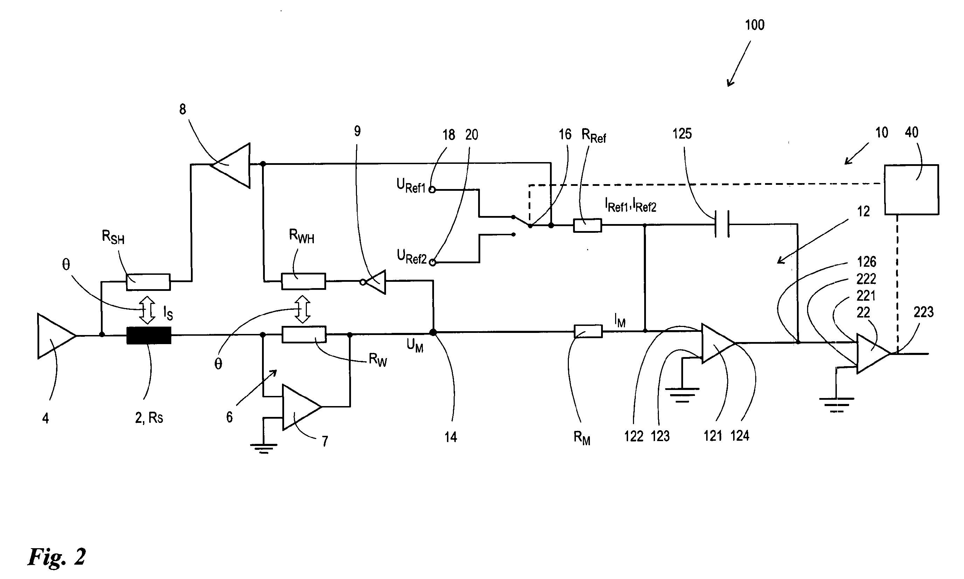

Figur 2 zeigt eine Prinzipskizze einer erfindungsgemäßen Weiterentwicklung der Vorrichtung von Figur 1. Der Strom/Spannungs-Wandler 6 ist bei dieser Ausführungsform als ein seriell der Tragspule 2 nachgeschalteter Wandler-Widerstand R_{W} mit parallel geschaltetem Differenzverstärker 7 ausgestaltet. Der Strom/Spannungs-Wandler 6 wandelt den Spulenstrom I_{S} mit einem Wandlungsfaktor, der dem Widerstandswert des Wandler-Widerstandes R_{w} entspricht, in die Messspannung UM um, die am Messspannungseingang 14 des A/D-Wandlers 10 anliegt. Diese Messspannung UM wird über den Invertierer 9 an einer Seite eines Heizwiderstandes R_{WH} angelegt, dessen Widerstandswert gleich dem Widerstandswert des Wandler-Widerstandes R_{W} ist. Die andere Seite des Heizwiderstandes R_{WH} ist mit dem Ausgang des Referenzspannungsschalters 16 verbunden, sodass über dem Heizwiderstand R_{WH} die Differenz aus Messspannung und jeweils aktueller Referenzspannung U_{Ref1} bzw. U_{Ref2} anliegt. Dabei ist zu beachten, dass die Zeitintervalle, in denen U_{Ref1} bzw. U_{Ref2} anliegen, dem Tastgrad δ entsprechen. Die Referenzspannung U_{Ref1}, U_{Ref2} liegt auch am Eingang eines Spannungsverstärkers 8 an, dessen Ausgang an einer Seite eines weiteren Heizwiderstandes R_{SH} anliegt, dessen andere Seite am Ausgang des Reglers 4 anliegt. Der Heizwiderstand R_{SH} ist, wie durch einen thermischen Kopplungspfeil θ angedeutet, mit der Tragspule 2 thermisch gekoppelt und weist denselben Widerstandswert wie diese auf. Der Heizwiderstand R_{WH} ist thermisch mit dem Wandlerwiderstand R_{W} gekoppelt, wie ebenfalls durch einen thermischen Kopplungspfeil θ angedeutet. Bei geeigneter Wahl des Verstärkungsfaktors des Spannungsverstärkers 8, nämlich g = R_{SH}/R_{WH} bzw. g = R_{S}/R_{W}, ergibt sich, wie sich mathematisch zeigen lässt, eine Konstanz, d.h. Tastgradunabhängigkeit der Verlustleistung, die an Tragspule 2, Wandlerwiderstand R_{W}, Heizwiderstand R_{WH} und Heizwiderstand R_{SH} in Summe und gemittelt über einen Messtakt anfällt. Die Verlustleistung ist somit nicht mehr messwertabhängig, sodass thermische Effekte stets den gleichen Einfluss unabhängig vom konkreten Messwert haben.

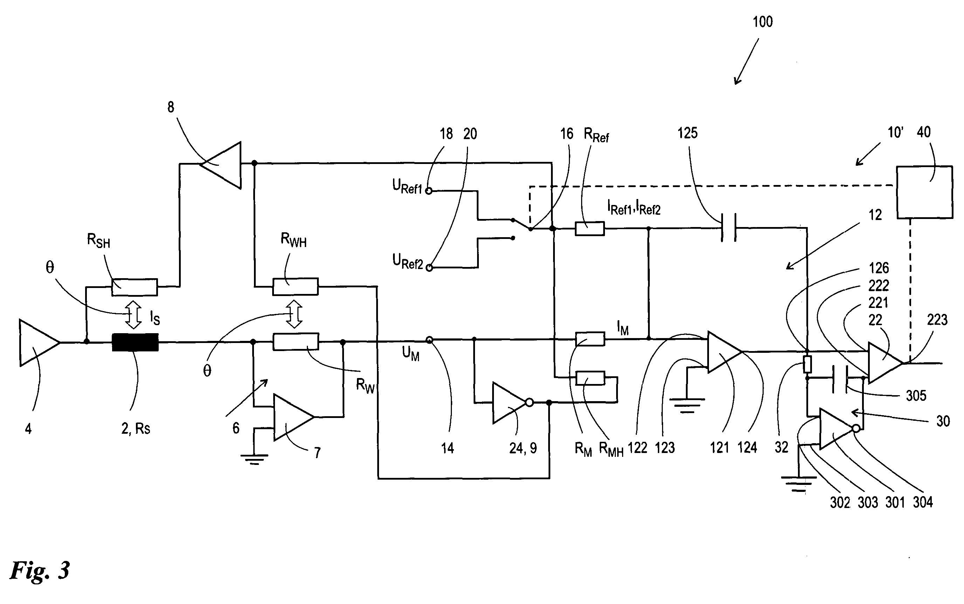

Figur 3 zeigt eine Weiterentwicklung der Vorrichtung von Figur 2. Hier sind im Bereich des A/D-Wandlers 10' eine Verlustleistungskompensation des Messwiderstandes R_{M} sowie eine Gleichanteilskompensation der Integratorspannung vorgesehen. Diese sollen weiter unten erläutert werden. In Bezug auf die Tragspulen-Verlustleistungskompensation ist diese Variante insofern besonders interessant, als der weiter unten erläuterte Invertierer 24, der Bestandteil der Verlustleistungskompensationsschaltung für den Messwiderstand R_{M} ist, zugleich als Invertierer 9 der Tragspulen-Verlustleistungskompensation dient, sodass hier lediglich ein einzelnes Bauteil erforderlich ist.

Der A/D-Wandler 10' der Figur 3 unterscheidet sich von dem A/D-Wandler 10 der Figur 2 in zwei Aspekten. Der erste Aspekt betrifft die Ausgestaltung der am Referenzspannungseingang 222 des Komparators 22 angelegten Komparator-Referenzspannung. Während beim A/D-Wandler 10 von Figur 2 hier schlicht Masse anliegt, ist beim A/D-Wandler 10' von Figur 3 der Ausgang eines zusätzlichen Integrators 30 mit dem Komparator-Referenzspannungseingang 222 verbunden. Der zusätzliche Integrator 30 umfasst einen Operationsverstärker 301 mit einem invertierenden Eingang 302, einem nicht-invertierenden Eingang 303 und einem Ausgang 304. Während der nicht-invertierende Eingang 303 gegen Masse geschaltet ist, ist der invertierende Eingang 302 über einen Kondensator 305 mit dem Ausgang 304 verbunden. Der Eingang des Integrators 30 liegt über einen Eingangswiderstand 32 am Ausgang 126 des Integrators 12 an. Die Wirkungsweise des zusätzlichen Integrators 30 liegt darin, dass er das Ausgangssignal des Integrators 12 mittelt und invertiert und dieses gemittelte Signal als Komparator-Referenzspannung dem Komparator 22 zur Verfügung stellt. Mit anderen Worten wird also im Komparator 22 das Integratorausgangssignal des Integrators 12 nicht mehr mit Masse verglichen, sondern mit seinem eigenen Mittelwert. Dadurch liegt am Kondensator 125 des Integrators 12 ein Spannungssignal ohne Gleichanteil an. Hierdurch werden gleichspannungsbedingte Störungen des Kondensators 125, wie beispielsweise Fehlströme und dielektrische Absorption vermieden oder zumindest reduziert. Hierdurch wird es möglich, ohne Einbußen in der Funktionalität im Integrator 12 qualitativ weniger hochwertige Kondensatorentypen als Kondensator 125 zu verwenden, was sich in einer deutlichen Kostenreduktion der Schaltung niederschlägt, oder alternativ bei gleich bleibender Kondensatorqualität zu einer Verbesserung der Messqualität zu gelangen.

Der zweite Aspekt, in dem sich der A/D-Wandler gemäß Figur 3 von demjenigen von Figur 2 unterscheidet, ist, dass sein Messspannungseingang 14 über einen Invertierer 24, d.h. über einen Spannungsverstärker mit Verstärkungsfaktor "-1", und den Heizwiderstand R_{MH} mit dem Ausgang des Referenzspannungsschalters 16 verbunden ist. Der Widerstandswert des Heizwiderstands R_{MH} ist gleich dem Widerstandswert des Messwiderstandes R_{M}. Ebenso ist der Widerstandswert des Referenzwiderstandes R_{ref} gleich dem Widerstandswert des Messwiderstandes R_{M}. Hierdurch ergibt sich eine Verlustleistungskonstanz, d.h. Tastgradunabhängigkeit der Verlustleistung, des gesamten A/D-Wandlers 10'.

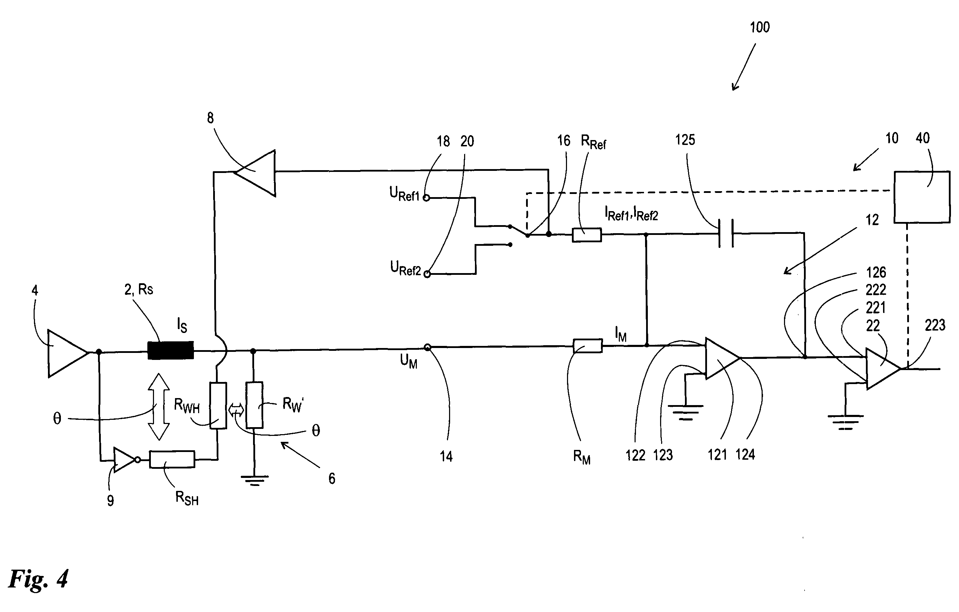

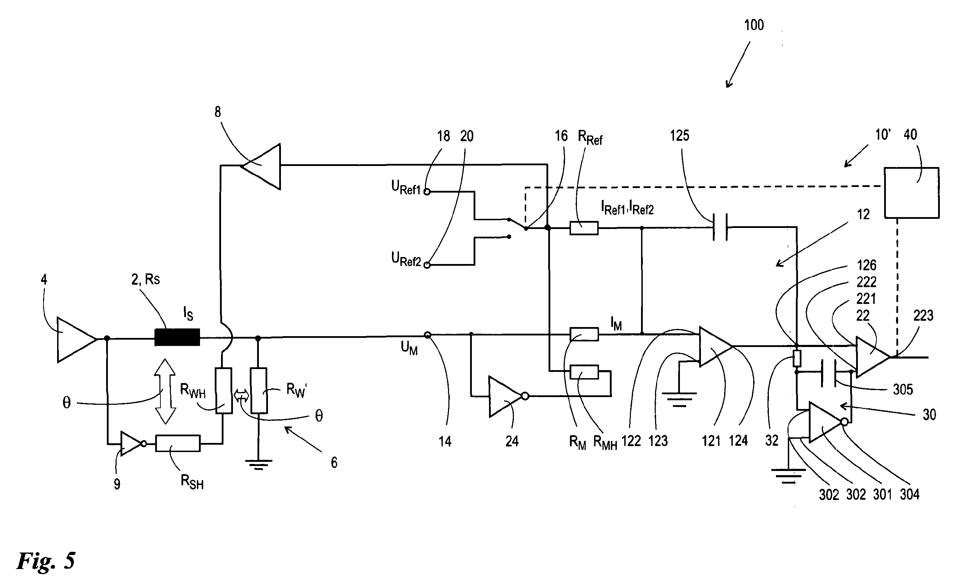

Figur 4 stellt eine alternative Weiterbildung der Vorrichtung von Figur 1 dar. Die Strom/Spannungs-Wandlung erfolgt hier mittels eines passiven Strom/Spannungs-Wandlers 6 mit dessen Shunt-Widerstand R_{W}'. Dieser wird wegen der vergleichbaren Aufgabe mit dem gleichen Bezugszeichen versehen wie der Wandlerwiderstand R_{W} in Figur 2 und 3. Der Shunt-Widerstand R_{W}' ist zwischen der Tragspule 2 und dem Messspannungseingang 14 des A/D-Wandlers 10 gegen Masse geschaltet. Wie auch bei der Ausführungsform der Figuren 2 und 3 ist ein Spannungsverstärker 8 vorgesehen, an dessen Eingang die jeweils aktuelle Referenzspannung U_{Ref1} bzw. U_{Ref2} anliegt. Der Ausgang des Spannungsverstärkers liegt an einer Seite der in Reihe geschalteten Heizwiderstände R_{SH} und R_{WH} an, an deren anderer Seite die mittels des Invertierers 9 invertierte Ausgangsspannung des Reglers 4 anliegt. Der Widerstandswert des Heizwiderstandes R_{WH} entspricht dem Widerstandswert des Shunt-Widerstandes R_{W'}; der Widerstandswert des Heizwiderstandes R_{SH} entspricht dem Widerstandswert der Tragspule 2. Der Heizwiderstand R_{SH} ist thermisch mit der Tragspule 2 gekoppelt, wie durch einen thermischen Kopplungspfeil θ angedeutet. Bei geeigneter Wahl des Verstärkungsfaktors des Spannungsverstärkers 8, nämlich g = (R_{WH}+R_{SH}) / R_{WH} bzw. g = (R_{W}+R_{S}) / R_{W}, ergibt sich, wie sich mathematisch zeigen lässt, eine Konstanz, d.h. Tastgradunabhängigkeit der Verlustleistung, die an der Tragspule 2, den Heizwiderständen R_{SH} und R_{WH} und dem Shunt-Widerstand R_{W}' in Summe und gemittelt über einen Messtakt anfällt. Die Verlustleistung ist somit nicht mehr messwertabhängig, sodass thermische Effekte stets den gleichen Einfluss unabhängig vom konkreten Messwert haben. Figur 5 schließlich stellt eine Weiterentwicklung der Vorrichtung von Figur 4 dar, die insbesondere über einen modifizierten A/D-Wandler 10' gem. Figur 3 verfügt.

### Bezugszeichenliste

- 100: Messwerterfassungsvorrichtung
- 2: Tragspule
- 4: Regler
- 6: Strom/Spannung-Wandler
- 7: Differenzverstärker
- 8: Spannungsverstärker
- 9: Invertierer
- 10, 10': A/D-Wandler
- 12: erster Integrator
- 121: Operationsverstärker von 12
- 122: invertierender Eingang von 121
- 123: nicht-invertierender Eingang von 121
- 124: Ausgang von 121
- 125: Kondensator von 12
- 126: Ausgang von 12
- 14: Messspannungseingang
- 16: Referenzspannungsschalter
- 18: erster Referenzspannungseingang
- 20: zweiter Referenzspannungseingang
- 22: Komparator
- 221: Testspannungseingang von 22
- 222: Referenzspannungseingang von 22
- 223: Ausgang von 22
- 24: Invertierer
- 30: zweiter Integrator
- 301: Operationsverstärker von 30
- 302: invertierender Eingang von 301
- 303: nicht-invertierender Eingang von 301
- 304: Ausgang von 301
- 305: Kondensator von 30
- 32: Eingangswiderstand vor 30
- 40: Steuereinrichtung
- R_{S}: Tragspulenwiderstand
- R_{SH}: Heizwiderstand
- R_{W}: Wandlerwiderstand
- R_{W}': Shunt-Widerstand
- R_{WH}: Heizwiderstand
- R_{M}: Messwiderstand
- R_{MH}: Heizwiderstand
- R_{ref}: Referenzwiderstand
- I_{S}: Spulenstrom
- U_{M}: Messspannung
- I_{M}: Messstrom
- U_{ref1}: erste Referenzspannung
- I_{ref1}: erster Referenzstrom
- U_{ref2}: zweite Referenzspannung
- I_{ref2}: zweiter Referenzstrom
- T: Messtaktdauer
- t1: erste Messphase (Aufintegrationsphase)
- τ: zweite Messphase (Abintegrationsphase)
- θ: Kopplungspfeil
- δ: Tastgrad
- g: Verstärkungsfaktor

## Patentansprüche

1. Elektromagnetisch kraftkompensierende Kraftmessvorrichtung, umfassend
- eine in einer Permanentmagnetanordnung gelagerte, bei Betrieb von einem mittels eines Reglers (4) kraftabhängig erzeugten Spulenstrom (I_{S}) durchflossene Tragspule (2), und
- einen integrierenden Analog/Digital-Wandler (10; 10'), der eingerichtet ist, ein für den Spulenstrom (I_{S}) repräsentatives elektrisches Signal (U_{M}), welches an seinem Messsignaleingang (14) anliegt, in ein digitales Ausgangssignal zu wandeln,
**dadurch gekennzeichnet,**
**dass** der Analog/Digital-Wandler (10; 10') an seinem Referenzspannungseingang (18, 20) mit einer Referenzspannungsquelle mit zwei zueinander betragsgleichen und umgekehrt gepolten Referenzspannungen (U_{Ref1}, U_{Ref2}) verbunden ist, welche ein Referenzspannungsschalter (16) abwechselnd mit einem Integrator (12) des Analog/Digital-Wandlers (10; 10') verbindet, wobei ein Verhältnis der Intervalle, in denen die einzelnen Referenzspannungen (U_{Ref1,} U_{Ref2}) innerhalb eines Messtaktes mit dem Integrator (16) verbunden sind, ein Maß für den aktuell fließenden Spulenstrom (I_{S}) darstellt,
und wobei der Ausgang des Reglers (4) über einen ersten, thermisch mit der Tragspule (2) gekoppelten Heizwiderstand (R_{SH}) mit dem Ausgang eines Spannungsverstärkers (8) verbunden ist, dessen Eingang mit dem Ausgang des Referenzspannungsschalters (16) verbunden ist, und dass der Tragspule (2) ein Strom/Spannungs-Wandler (6) nachgeschaltet ist, dessen Ausgang mit dem Messspannungseingang (14) des Analog/Digital-Wandlers (10; 10') sowie über einen Invertierer (9) und einen zweiten Heizwiderstand (R_{WH}) mit dem Eingang des Spannungsverstärkers (8) verbunden ist, wobei
- der Widerstandwert des ersten Heizwiderstandes (R_{SH}) gleich dem Widerstandswert der Tragspule (2) ist,
- der Widerstandswert des zweiten Heizwiderstandes (R_{WH}) gleich dem Wandlungsfaktor des Strom/Spannungs-Wandlers (6) ist und
- der Verstärkungsfaktor des Spannungsverstärkers (8) gleich dem Quotienten aus dem Widerstandswert des ersten Heizwiderstandes zu dem Widerstandswert des zweiten Heizwiderstandes ist.

2. Kraftmessvorrichtung nach Anspruch 1,
**dadurch gekennzeichnet,**
**dass** der Strom/Spannungs-Wandler (6) einen seriell zwischen der Tragspule (2) und dem Eingang des Analog/Digital-Wandlers (10; 10') geschalteten Wandler-Widerstand (R_{W}) und einen parallel zu diesem geschalteten Differenzverstärker (7) aufweist.

3. Kraftmessvorrichtung nach einem der vorangehenden Ansprüche,
**dadurch gekennzeichnet,**
**dass** der Invertierer (9) Bestandteil einer Leistungskompensationsschaltung innerhalb des Analog/Digital-Wandlers (10') ist.

4. Elektromagnetisch kraftkompensierende Kraftmessvorrichtung, umfassend
- eine in einer Permanentmagnetanordnung gelagerte, bei Betrieb von einem mittels eines Reglers (4) kraftabhängig erzeugten Spulenstrom (I_{S}) durchflossene Tragspule, und
- einen integrierenden Analog/Digital-Wandler (10; 10'), der eingerichtet ist, ein für den Spulenstrom (I_{S}) repräsentatives elektrisches Signal (U_{M}), welches an seinem Messsignaleingang (14) anliegt, in ein digitales Ausgangssignal zu wandeln,
**dadurch gekennzeichnet,**
**dass** der Analog/Digital-Wandler (10; 10') an seinem Referenzspannungseingang (18, 20) mit einer Referenzspannungsquelle mit zwei zueinander betragsgleichen und umgekehrt gepolten Referenzspannungen (U_{Ref1}, U_{REf2}) verbunden ist, welche ein Referenzspannungsschalter (16) abwechselnd mit einem Integrator (12) des Analog/Digital-Wandlers (10, 10') verbindet, wobei ein Verhältnis der Intervalle, in denen die einzelnen Referenzspannungen (U_{REF1}, U_{REF2}) innerhalb eines Messtaktes mit dem Integrator(12) verbunden sind, ein Maß für den aktuell fließenden Spulenstrom (I_{S}) darstellt,
und wobei der Ausgang des Reglers (4) über einen Invertierer (9), einen ersten, thermisch mit der Tragspule (2) gekoppelten Heizwiderstand (R_{SH}) und einen zweiten Heizwiderstand (R_{WH}) mit dem Ausgang eines Spannungsverstärkers (8) verbunden ist, dessen Eingang mit dem Ausgang des Referenzspannungsschalters (16) verbunden ist, und dass der Tragspule (2) ein passiver Strom/Spannungswandler (6) mit einem gegen Masse geschalteten Shunt-Widerstand nachgeschaltet ist, dessen Ausgang mit dem Messspannungseingang (14) des Analog/Digital-Wandlers (10, 10') verbunden ist,
wobei
- der Widerstandwert des ersten Heizwiderstandes (R_{SH}) gleich dem Widerstandswert der Tragspule (2) ist,
- der Widerstandswert des zweiten Heizwiderstandes (R_{WH}) gleich dem Widerstandswert des Shunt-Widerstandes (R_{W}') ist und
- der Verstärkungsfaktor des Spannungsverstärkers (8) gleich dem Quotienten aus der Summe der Widerstandswerte von erstem und zweitem Heizwiderstand (R_{SH}, R_{WH}) zu dem Widerstandswert des zweiten Heizwiderstandes (R_{WH}) ist.

## Claims

1. Electromagnetic force-compensating force-measuring device, comprising
- a carrier coil (2), which is mounted in a permanent magnet arrangement and which during operation conducts a coil current (I_{S}) generated in dependence on force by means of a regulator (4), and
- an integrating analog-to-digital converter (10; 10') arranged to convert an electrical signal (U_{M}), which is representative of the coil current (I_{S}) and which is applied to the measurement signal input (14) of the converter, into a digital output signal,
**characterised in that**
the analog-to-digital converter (10; 10') is connected at its reference voltage input (18, 20) with a reference voltage source with two oppositely poled reference voltages (U_{Ref1}, U_{Ref2}) of equal amount which a reference voltage switch (16) connects in alternation with an integrator (12) of the analog-to-digital converter (10, 10'), wherein a ratio of the intervals at which the individual reference voltages (U_{Ref1}, U_{Ref2}) are connected with the integrator (16) within a measurement cycle represents a measure for the instantaneously flowing coil current (I_{S}),
wherein the output of the regulator (4) is connected by way of a first heating resistor (R_{SH}), which is thermally coupled with the carrier coil (2), with the output of a voltage amplifier (8) connected at the input thereof with the output of the reference voltage switch (16),
and that connected downstream of the carrier coil (2) is a current/voltage converter (6), the output of which is connected with the measuring voltage input (14) of the analog-to-digital converter (10; 10') as well as by way of an inverter (9) and a second heating resistor (R_{WH}) with the input of the voltage amplifier (8),
wherein
- the resistance value of the first heating resistor (R_{SH}) is equal to the resistance value of the carrier coil (2),
- the resistance value of the second heating resistor (R_{WH}) is equal to the conversion factor of the current/voltage converter (6) and
- the amplification factor of the voltage amplifier (8) is equal to the quotient of the resistance value of the first heating resistor and the resistance value of the second heating resistor.

2. Force-measuring device according to claim 1, **characterised in that** the current/voltage converter (6) comprises a converter resistor (R_{W}) connected serially between the carrier coil (2) and the input of the analog-to-digital converter (10; 10') and a difference amplifier (7) connected in parallel with this resistor.

3. Force-measuring device according to one of the preceding claims, **characterised in that** the inverter (9) is a component of a power compensation circuit within the analog-to-digital converter (10').

4. Electromagnetic force-compensating force-measuring device, comprising
- a carrier coil (2), which is mounted in a permanent magnet arrangement and which during operation conducts a coil current (I_{S}) generated in dependence on force by means of a regulator (4), and
- an integrating analog-to-digital converter (10; 10') arranged to convert an electrical signal (U_{M}), which is representative of the coil current (I_{S}) and which is applied to the measurement signal input (14) of the converter, into a digital output signal,
**characterised in that**
the analog-to-digital converter (10; 10') is connected at its reference voltage input (18, 20) with a reference voltage source with two oppositely poled reference voltages (U_{Ref1}, U_{Ref2}) of equal amount which a reference voltage switch (16) connects in alternation with an integrator (12) of the analog-to-digital converter (10, 10'), wherein a ratio of the intervals at which the individual reference voltages (U_{Ref1}, U_{Ref2}) are connected with the integrator (16) within a measurement cycle represents a measure for the instantaneously flowing coil current (I_{S}),
wherein the output of the regulator (4) is connected by way of an inverter (9), a first heating resistor (R_{SH}), which is thermally coupled with the carrier coil (2), and a second heating resistor (R_{WH}) with the output of a voltage amplifier (8), the input of which is connected with the output of the reference voltage switch (16),
and that connected downstream of the carrier coil (2) is a passive current/voltage converter (6), with a shunt resistor which is connected with ground and the output of which is connected with the measurement voltage input (14) of the analog-to-digital converter (10; 10'), wherein
- the resistance value of the first heating resistor (R_{SH}) is equal to the resistance value of the carrier coil (2),
- the resistance value of the second heating resistor (R_{WH}) is equal to the resistance value of the shunt resistor (R_{W}') and
- the amplification factor of the voltage amplifier (8) is equal to the quotient of the sum of the resistance values of the first and second heating resistors (R_{SH}, R_{WH}) and the resistance value of the second heating resistor (R_{WH}).

## Revendications

1. Dispositif dynamométrique à compensation de force électromagnétique, comprenant
- une bobine porteuse (2) montée dans un dispositif d'aimant permanent, traversée en fonctionnement par un courant de bobine (I_{S}) généré en fonction de la force au moyen d'un régulateur (4), et
- un convertisseur analogique/numérique intégrateur (10 ; 10'), prévu pour convertir un signal électrique (U_{M}) représentatif pour le courant de bobine (I_{S}), appliqué à son entrée de signal de mesure (14), en un signal de sortie numérique,
**caractérisé en ce que**
le convertisseur analogique/numérique (10 ; 10') est à son entrée (18, 20) de tension de référence relié à une source de tension de référence avec deux tensions de référence (U_{Ref1}, U_{Ref2}) de même valeur et à polarités opposées, laquelle relie alternativement un commutateur (16) de tension de référence à un intégrateur (12) du convertisseur analogique/numérique (10 ; 10'), un rapport des intervalles auxquels les différentes tensions de référence (U_{Ref1}, U_{Ref2}) sont reliées à l'intégrateur (12) pendant un cycle de mesure représentant une valeur du courant de bobine (I_{S}) circulant à ce moment,
et où la sortie du régulateur (4) est reliée par une première thermistance (R_{SH}), thermiquement couplée à la bobine porteuse (2), à la sortie d'un amplificateur de tension (8) dont l'entrée est reliée à la sortie du commutateur (16) de tension de référence, et **en ce qu'**un convertisseur courant/tension (6) est monté en aval de la bobine porteuse (2), dont la sortie est reliée à l'entrée de tension de mesure (14) du convertisseur analogique/numérique (10 ; 10') ainsi qu'à l'entrée de l'amplificateur de tension (8) au moyen d'un inverseur (9) et d'une deuxième thermistance (R_{WH}), où
- la valeur de résistance de la première thermistance (R_{SH}) est égale à la valeur de résistance de la bobine porteuse (2),
- la valeur de résistance de la deuxième thermistance (R_{WH}) est égale au facteur de conversion du convertisseur courant/tension (6), et
- le gain de l'amplificateur de tension (8) est égal au quotient de la valeur de résistance de la première thermistance sur la valeur de résistance de la deuxième thermistance.

2. Dispositif dynamométrique selon la revendication 1, **caractérisé en ce que**
le convertisseur courant/tension (6) comporte une résistance (R_{W}) de convertisseur montée en série entre la bobine porteuse (2) et l'entrée du convertisseur analogique/numérique (10 ; 10') et un amplificateur différentiel (7) monté parallèlement à celle-ci.

3. Dispositif dynamométrique selon l'une des revendications précédentes,
**caractérisé en ce que**
l'inverseur (9) est un composant d'un circuit de compensation de puissance à l'intérieur du convertisseur analogique/numérique (10').

4. Dispositif dynamométrique à compensation de force électromagnétique, comprenant
- une bobine porteuse montée dans un dispositif d'aimant permanent, traversée en fonctionnement par un courant de bobine (I_{S}) généré en fonction de la force au moyen d'un régulateur (4), et
- un convertisseur analogique/numérique intégrateur (10 ; 10'), prévu pour convertir un signal électrique (U_{M}) représentatif pour le courant de bobine (I_{S}), appliqué à son entrée de signal de mesure (14), en un signal de sortie numérique,
**caractérisé en ce que**
le convertisseur analogique/numérique (10 ; 10') est à son entrée (18, 20) de tension de référence relié à une source de tension de référence avec deux tensions de référence (U_{Ref1}, U_{Ref2}) de même valeur et à polarités opposées, laquelle relie alternativement un commutateur (16) de tension de référence à un intégrateur (12) du convertisseur analogique/numérique (10 ; 10'), un rapport des intervalles auxquels les différentes tensions de référence (U_{Ref1}, U_{Ref2}) sont reliées à l'intégrateur (12) pendant un cycle de mesure représentant une valeur du courant de bobine (I_{S}) circulant à ce moment,
et où la sortie du régulateur (4) est reliée par un inverseur (9), une première thermistance (R_{SH}), thermiquement couplée à la bobine porteuse (2), et une deuxième thermistance (R_{WH}), à la sortie d'un amplificateur de tension (8) dont l'entrée est reliée à la sortie du commutateur (16) de tension de référence, et **en ce qu'**un convertisseur courant/tension passif (6) avec une résistance shunt reliée à la masse est monté en aval de la bobine porteuse (2), dont la sortie est reliée à l'entrée de tension de mesure (14) du convertisseur analogique/numérique (10 ; 10'), où
- la valeur de résistance de la première thermistance (R_{SH}) est égale à la valeur de résistance de la bobine porteuse (2),
- la valeur de résistance de la deuxième thermistance (R_{WH}) est égale à la valeur de résistance de la résistance shunt (R_{W}'), et
- le gain de l'amplificateur de tension (8) est égal au quotient de la somme des valeurs de résistance de la première et de la deuxièmes thermistances (R_{SH}, R_{WH}) sur la valeur de résistance de la deuxième thermistance (R_{WH}).
